# EUROPEAN PATENT APPLICATION

(11) **EP 2 551 252 A2**
(43) Date of publication of application: **30.01.2013**
(21) Application number: 12178241.1
(22) Date of filing: 27.07.2012
(51) Int. Cl.: C04B 41/87, C04B 41/89, F01D 5/28

(54) **System and method for protection of high temperature machinery components**

(30) Priority: 29.07.2011 US 201113194474
(71) Applicant: General Electric Company, Schenectady, NY 12345 (US)
(72) Inventor: Meschter, Peter Joel, Niskayuna, NY New York 12309 (US); Luthra, Krisham Lal, Niskayuna, NY New York 12309 (US)
(74) Representative: Szary, Anne Catherine

(57) **Abstract**

A system (10) comprises a plurality of components (20) disposed to define a gas path (30). At least one component (20) comprises a silicon-bearing substrate (40) over which is disposed a coating (50), and the coating (50) comprises a recession-resistant material exposed to the gas path (30). A silicon source (60) is disposed in fluid communication with the gas path (30) and is configured to be delivered to the gas path (30) to maintain, in gas flowing in the gas path over the coating (50), a silicon mass concentration in the range from about 1.8 x 10⁻⁴ parts per million to about 1 part per million. An associated method comprises directing a combustion gas flow (440) within a gas path (30), the gas path (30) defined by a plurality of components (20), wherein at least one component (20) comprises a silicon-bearing substrate (40) over which is disposed a coating (50), the coating (50) comprising a recession-resistant material exposed to the gas path (30); and delivering a silicon-containing material to the gas flow (440) from a silicon source (60) disposed in fluid communication with the gas path (30) to maintain within the gas flow (30) over the coating (50), a silicon mass concentration in the range from about 1.8 x 10⁻⁴ parts per million to about 1 part per million.

## Description

### BACKGROUND

The invention relates to silicon-containing materials in combustion gas environments, and more particularly, relates to a method to reduce or prevent the material loss of silica and silicon-containing materials in high temperature combustion gas environments, such as encountered in industrial land-based turbines, aircraft engines, diesel engines and heat exchangers.

Silicon-based monolithic ceramics, such as silicon carbide or silicon nitride, and silicon-containing composites, including continuous-fiber reinforced ceramic composites, are attractive candidates for high temperature structural applications, such as component parts for gas turbines, aircraft engines, and heat exchangers. However, the environments characteristic of these applications often contain reactive species, such as water vapor, which at high temperatures has been shown to cause significant surface recession and mass loss in silicon-bearing materials. The water vapor reacts with the structural material at high temperatures to form volatile silicon-containing species, often resulting in unacceptably high recession rates.

Various methods to mitigate high-temperature degradation of silicon bearing materials have been developed. For example, US Patent 6,517,341 describes a method to reduce this degradation by injecting silicon into a combustion gas environment where silicon-bearing components are being used. The increased level of silicon in the environment suppresses the chemical reactions occurring at the surface of the silicon-bearing components. This method may result in somewhat increased particulate concentrations in the exhaust stream.

Other methods for mitigating recession of silicon-bearing materials include application of coatings. Environmental barrier coatings (EBC's) are applied to silicon-bearing materials and other material susceptible to attack by reactive species, such as high temperature water vapor; EBC's provide protection by prohibiting contact between the environment and the surface of the material. EBC's applied to silicon-bearing materials, for example, are designed to be relatively stable chemically in high-temperature, water vapor-containing environments.

One illustrative conventional EBC system, as described in U.S. Patent No. 6,410,148, comprises a silicon or silica bond layer applied to a silicon-bearing substrate; an intermediate layer comprising mullite or a mullite-alkaline earth aluminosilicate mixture deposited over the bond layer; and a top layer comprising an alkaline earth aluminosilicate deposited over the intermediate layer. A second type of EBC comprises a topcoat that includes a rare earth silicate compound (see, for instance, US Patent Nos. 6,296,941; 6,312,763; and 6,759,151). These ceramic coating systems can be effective in mitigating degradation under certain circumstances, but under some conditions can be susceptible to cracking and spalling.

Therefore, there remains a need in the art for systems and related methods that can operate at high temperature while mitigating component degradation.

### BRIEF DESCRIPTION

Embodiments of the present invention are provided to meet these and other needs. One embodiment is a system. The system comprises a plurality of components disposed to define a gas path. At least one component comprises a silicon-bearing substrate over which is disposed a coating, and the coating comprises a recession-resistant material exposed to the gas path. A silicon source is disposed in fluid communication with the gas path and is configured to be delivered to the gas path to maintain, in gas flowing in the gas path over the coating, a silicon mass concentration in the range from about 1.8 x 10⁻⁴ parts per million to about 1 part per million.

Another embodiment is a method. The method comprises directing a combustion gas flow within a gas path, the gas path defined by a plurality of components, wherein at least one component comprises a silicon-bearing substrate over which is disposed a coating, the coating comprising a recession-resistant material exposed to the gas path; and delivering a silicon-containing material to the gas flow from a silicon source disposed in fluid communication with the gas path to maintain within the gas flow over the coating, a silicon mass concentration in the range from about 1.8 x 10⁻⁴ parts per million to about 1 part per million.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
Figure 1 is a schematic block diagram illustrating a system according to an embodiment of the present invention;
Figure 2 is a schematic cross-section of a component of a system according to an embodiment of the present invention;
Figure 3 is a schematic cross-section of a component of a system according to an embodiment of the present invention; and
Figure 4 is a schematic block diagram of a component of a system according to an embodiment of the present invention.

### DETAILED DESCRIPTION

Approximating language, as used herein throughout the specification and claims, may be applied to modify any quantitative representation that could permissibly vary without resulting in a change in the basic function to which it is related. Accordingly, a value modified by a term or terms, such as "about", is not limited to the precise value specified. In some instances, the approximating language may correspond to the precision of an instrument for measuring the value. The singular forms "a," "an," and "the" include plural referents unless the context clearly dictates otherwise, and alternatives joined by "or" should not be construed as limiting lists or as mutually exclusive alternatives unless explicitly stated otherwise. Thus a description of "A or B" contemplates embodiments involving A, embodiments involving B, and embodiments involving both A and B together.

Turbines typically have more than one row ("stage") of components to extract energy from the hot gas flowing through the gas path. As the gas passes through successive stages, the gas expands to a larger volume, and the gas temperature is reduced. The injection method of US 6,517,341, referred to above, may result in increased silica or other particulate formation within the gas. These particulates may deposit on later stage components that are cooler than combustion components or early-stage turbomachinery components, thereby potentially reducing aerodynamic efficiency of such components by fouling.

The service life of an aluminosilicate-based EBC is limited by the volatilization/recession rate of the aluminosilicate material. To ensure adequate service life, e.g., 32,000 hours at a material surface temperature of 1300°C, the thickness of the material is generally large, such as 500-800 micrometers. As thickness increases, the probability of processing defects that lead to premature EBC cracking and spallation also increases. EBC's of this type have thus been restricted to applications in which the nominal material surface temperature is less than about 1300°C. EBC's comprising a rare earth silicate compound have adequate volatilization/recession resistance over a wide service temperature range, but may have a complex architecture that is susceptible to formation of defects upon processing and heat treatment.

Embodiments of the present invention addresses the disadvantages noted above, taking advantage of synergistic cooperation between a recession-resistant EBC and an environment that suppresses recession of the coating material.

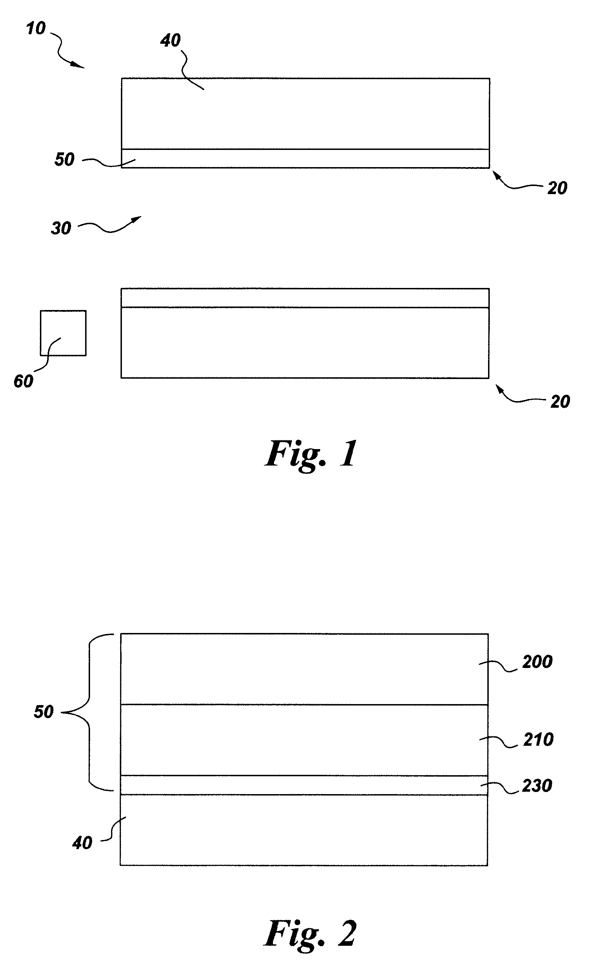

Referring to Figure 1, one embodiment is a system 10 comprising a plurality of components 20 disposed to define a gas path 30. In one embodiment, system 10 is a gas turbine assembly or a portion of such an assembly, and thus in such embodiments gas path 30 is disposed within a gas turbine assembly. At least one component 20 comprises a silicon-bearing substrate 40. A coating 50 is disposed over substrate 40. Coating 50 comprises a recession-resistant material exposed to gas path 30. In one embodiment, substrate 40 comprises silicon carbide, silicon nitride, or molybdenum silicide; and in particular embodiments comprises a ceramic matrix composite material that includes silicon carbide. Examples of component 20 include components of a gas turbine assembly, such as a combustion liner, a shroud, a turbine blade, a turbine vane, or a transition piece.

System 10 further comprises a silicon source 60 disposed in fluid communication with gas path 30. Source 60 is configured, such as through sufficient volume, position, composition, and metering, where appropriate, to maintain a silicon mass concentration in the range from about 1.8 x 10⁻⁴ parts per million to about 1 part per million within gas flowing in gas path 30. This silicon mass concentration is significantly lower than that described in US 6,517,341.

One advantage of system 10 over conventional protection systems is its potential for use of coatings that are much thinner than those conventionally applied in the art. Due to the higher silicon activity of the gas flowing over coating 50, recession rates may be significantly lower than those expected in the absence of silicon injection. With lower recession rates, thinner coatings may be applied to achieve long lifetimes. In one embodiment, coating 50 has a thickness up to about 250 micrometers. In certain embodiments, the thickness is even less, such as up to about 125 micrometers, and in particular embodiments the coating thickness is up to about 50 micrometers. The use of such thin coatings may mitigate risks of processing defects noted above for conventionally designed coatings.

Another advantage of system 10 is its use of very low silicon injection concentrations. Due to the presence of recession-resistant coating 50, silicon concentration levels may be up to a factor of 50 lower than those described in US 6,517,341. This use of lower silicon levels may reduce costs attributable to consumption of injected source material. It also may reduce the risk of fouling of latter-stage components because the amount of particulate formation may be significantly lower in the present system.

The advantages noted above are synergistic in that the combination of thin coating and low injected silicon level provides advantages beyond what either of the two could provide on its own.

Coating 50 comprises a recession resistant material, meaning a material that is resistant to reaction with water vapor at high temperatures, such as those temperatures nominally used in turbomachinery and other high-temperature applications. In some embodiments, coating 50 comprises a silicate. One example of a silicate is an aluminosilicate. In some embodiments, the recession-resistant material comprises an alkaline-earth aluminosilicate. In particular embodiments, the alkaline earth aluminosilicate comprises an alkaline-earth element such as barium or strontium. Such embodiments include those in which the recession-resistant material comprises barium strontium aluminosilicate. Another example of a silicate is a rare-earth disilicate. As used herein, a rare earth disilicate may include any of the lanthanide series elements, yttrium or scandium. In particular embodiments, the recession-resistant material includes yttrium disilicate, ytterbium disilicate, or ytterbium doped yttrium disilicate.

Coating 50 may be a single layer, or in some embodiments may include multiple layers. It will be appreciated that recession-resistant material need not reside in an outermost layer of coating 50 to be exposed to gas in gas path 30; thus in some embodiments, recession-resistant material may be disposed beneath an outer layer but may still be exposed, via cracks, pores, etc., in the outer layer(s), to a portion of the gas flowing within gas path 30 during operation of system 10. It will also be appreciated that, where coating 50 includes multiple layers, recession-resistant material may be present in more than one layer. In some embodiments, as shown in Figure 2, coating 50 includes a plurality of layers, including a barrier layer 200 and an intermediate layer 210 disposed between barrier layer 200 and substrate 40. Barrier layer 200 comprises recession-resistant material. In some embodiments, intermediate layer 210 comprises a rare-earth silicate (such as a disilicate), an alkaline earth aluminosilicate (such as barium strontium aluminosilicate), or mullite. A bondcoat 230 may be disposed on substrate 40, with or without intermediate layer 210 being present. Bondcoat 230 typically comprises silicon; examples of bondcoat materials include elemental silicon, silicon oxide, and silicide compounds.

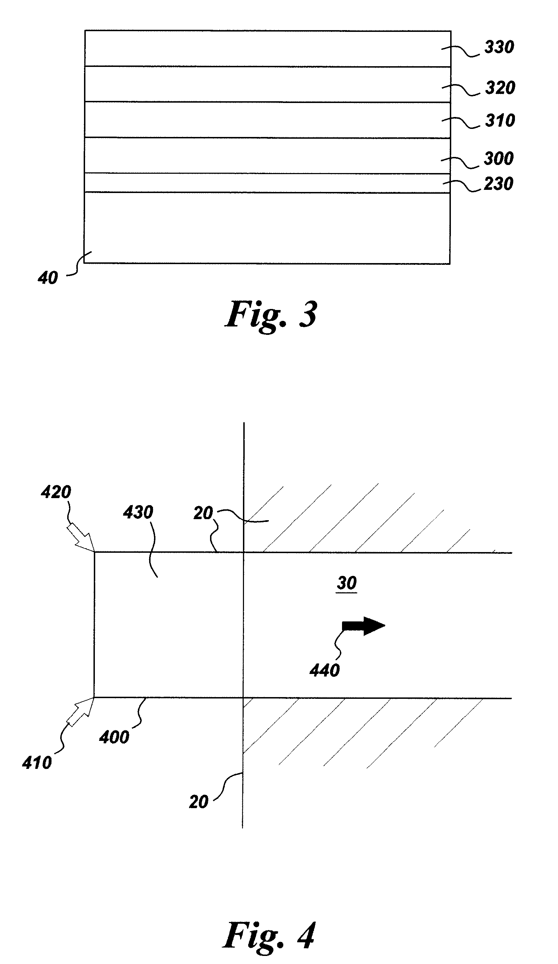

More complicated coating arrangements may also be used. As an example of the possibilities, a particular embodiment is illustrated in Figure 3. A bondcoat 230 is disposed over substrate 40. A layer comprising rare-earth disilicate 300 is disposed over bondcoat 230, and a layer 310 comprising aluminosilicate, such as barium strontium aluminosilicate, is disposed over layer 300. A second layer comprising rare-earth disilicate 320 is disposed over layer 310. In some embodiments, a layer comprising a rare earth monosilicate 330 is disposed over layer 320. However, under certain conditions rare earth monosilicate coatings (such as layer 330) need not be applied because the protection afforded to the underlying layers, such as layers 300, 310, 320, by the injected silicon-bearing material may be sufficient to eliminate the need for the high recession resistance typically afforded by rare-earth monosilicates. Thus, while the scope of these embodiments should not be construed as precluding the use of layer 330, it is envisioned that in many applications of the techniques described herein, layer 330 can be eliminated while maintaining sufficient levels of protection.

Coating 50 (including component layers, as appropriate) may be fabricated by various techniques. Examples of commonly used and well-known techniques for fabricating coatings of the type described herein include plasma spraying, chemical vapor deposition, physical vapor deposition, and slurry coating techniques.

Silicon source 60 provides silicon in some form to flow path 30 during the operation of system 10. Source 60 is disposed in fluid communication with gas path 30 to enable injection of silicon-bearing material from source into gas path 30. Source 60 thus may be connected to gas path 30 directly. In some embodiments, as shown in Figure 4, the plurality of components 20 includes a combustor 400 disposed to receive an air input 410 and a fuel input 420, to burn the fuel coming from fuel input 420 in a combustion chamber 430, and to deliver a combustion gas 440, that is, the gaseous exhaust products of combustion, to gas path 30. Silicon source 60 may be in fluid communication with air input 410 to allow injection into intake air; with fuel input 420; or with combustion chamber 430 to allow combustion to occur with silicon source material present. Source 60 may be said to be in fluid communication with fuel input 420 for embodiments in which silicon source 60 is present as an additive in the fuel, and for embodiments in which source 60 is kept separate from the fuel and is injected into the fuel as the fuel is traveling to combustor 400.

In one embodiment, source 60 comprises elemental silicon or a silicon-containing compound, and source 60 may comprise a solid, liquid, or gas. It is generally desirable to add the silicon or silicon-containing compounds from source 60 in a form that leads to rapid volatilization of silicon as silicon hydroxide. The silicon compounds can be added to liquid fuel as organic compounds in a solution or as a slurry that can be emulsified. Examples of organic compounds that can be used for addition to the fuel are siloxanes, such as, but not limited to, octamethylcyclotetrasiloxane and hexamethyldisiloxane. Both of these compounds are low viscosity liquids with good stability in the presence of water vapor in ambient air.

The silicon-containing compounds can be added into the air used for combustion, which may provide rapid volatilization, such as by injecting silicon-bearing material from source 60 downstream of a compressor (not shown) and just before the combustor 400. They can also be added directly into the combustion gases exiting from combustor 400. The silicon-containing compounds of source 60 can be in the form of organic compounds, which would volatilize readily, or in the form of slurries of fme particulate silicon-containing compounds, such as, but not limited to, silicon oxide, silicon, silicon carbide, silicon nitride, silicon boride, and mixtures thereof. Additional examples of materials useful for source 60 include siloxanes, silanes, silica, silicones, silicon carbides, silicon nitrides, silicon oxides, silicates, and sand. Tetramethylsilane, with a boiling point of 26.5 degrees C, can be added directly to natural gas fuel. The siloxanes mentioned above, octamethylcyclotetrasiloxane and hexamethyldisiloxane, have higher boiling points then tetramethylsilane; these may be injected as liquids into air input 410. The technique would also include premixed prevaporized concepts, where prevaporization of the fuel and silicon-containing material then undergoes premixing of the vaporized fuel/silicon-containing material with compressed air before combustion occurs. In addition, colloidal silica, or other silicon-bearing particulate, dispersed in water can be injected directly into the air input 410.

The level of silicon needed by injection or mixing into the combustion gases is an amount to form a sufficient concentration of silicon hydroxide products, such as Si(OH)₄ , so as to significantly reduce or eliminate the thermodynamic driving force for volatilization of silica present in the recession-resistant material of coating 50. The silicon concentration in the gas flowing over coating 50 needed to alleviate or prevent the loss of material increases with the pressure, temperature, water vapor concentration, and proximity to stoichiometric combustion. Details and examples of calculations of this type are illustrated in US 6,517,341, which is incorporated by reference herein. Because the activity of silica is much lower in the recession-resistant materials of coating 50 than in uncoated parts as described in US 6,517,341, the resultant levels of silicon needed to mitigate recession are significantly lower.

One embodiment of the present invention is a method. The method comprises directing a gas flow, such as a combustion gas flow, along a gas path, such as gas path 30 described above and depicted in Figure 1. As described previously, gas path 30 is defined by a plurality of components 20, and at least one of these components 20 comprises a silicon-bearing substrate 40. A coating 50 is disposed over substrate 40. Coating 50 comprises a recession-resistant material exposed to gas path 30. The method further comprises delivering a silicon-containing material to gas flow 30. The silicon-containing material comes from a silicon source 60 disposed in fluid communication with gas path 30 to maintain a silicon mass concentration in the range from about 1.8 x 10⁻⁴ parts per million to about 1 part per million. The description of system 10, above, is applicable for various embodiments of the method described herein, as system 10 may, in some embodiments, be applied to practice embodiments of this method. In some embodiments, the temperature of substrate 40 is at least about 500°C and may be at least about 1000°C; in particular embodiments the temperature is at least about 1200°C.

In certain embodiments, the gas flow is directed in part by accepting an air input 410 (Figure 4) and a fuel input 420 in a combustor 400 and burning the fuel in a combustion chamber 430 of combustor 400 to produce the combustion gas flow 440. As noted above, silicon-containing material from silicon source 60 may be delivered to the gas flow by injecting the material at any convenient point, such as air input 410, fuel input 420, combustion chamber 430, or the combustion gas flow 440 itself.

It will be appreciated that various methods of maintaining the desired silicon concentration in the gas flow are possible and depend in part on the manner in which the silicon is to be injected into the gas flow. For instance, where a silicon-containing material is to be added to fuel, the concentration in the fuel may depend in part on the expected fuel flow rate; where the material is to be injected into air input 410, the rate of injection may depend in part on the concentration of silicon in the source 60 and the rate of air injection into combustor 400. Calculations and apparatus to determine and control the appropriate flow rates and concentrations are readily available to those skilled in the art.

### EXAMPLE

The following example is provided to further illustrate embodiments of the present invention and should not be construed as limiting the scope as described herein.

A hot gas path component of a gas turbine engine comprises a ceramic matrix composite (CMC) comprising silicon carbide at a typical operating temperature of 1315° C (2400° F). Under a particular set of operating conditions, in the absence of a protective coating comprising recession-resistant material, the CMC can be protected by Si injection of a suitable Si-bearing organic species at a concentration of approximately 20 parts per million by weight (wppm) Si in the fuel or approximately 0.6 wppm Si in the air according to US 6,517,431. As the Si-bearing gas is cooled by passing through the engine, it becomes supersaturated in Si and cooler portions of the engine may experience deposition of SiO₂ with attendant fouling. On the other hand, the CMC can be protected by an environmental barrier coating with a barrier layer comprising an aluminosilicate according to US 6,410,148. In order to prevent loss of this layer by reaction with the water vapor-bearing combustion gas within the anticipated service life, the barrier layer may have to be 500-800 micrometers thick. Such a thick coating runs the risk of cracking or spallation with loss of the protective function during the service lifetime of the part. The aluminosilicate barrier layer can be protected by a Si injection level of approximately 0.5 wppm in the fuel or 0.017 wppm in the air. At this low Si injection level, subsequent cooling of the combustion gas as it passes through the engine will not cause SiO₂ deposition on airfoils or other regions where such deposition would be deleterious. In addition, since the aluminosilicate barrier layer is completely or largely protected from water vapor reaction by the injected Si, it can be thinner, e.g., 125 micrometers or even 50 micrometers thick, and the risk of cracking and spallation owing to processing or in-service defects is substantially mitigated.

Various aspects and embodiments of the present invention are defined by the following numbered clauses:
1. A system comprising:
   a plurality of components disposed to define a gas path, wherein at least one component comprises a silicon-bearing substrate over which is disposed a coating, the coating comprising a recession-resistant material exposed to the gas path; and
   a silicon source disposed in fluid communication with the gas path and configured to be delivered to the gas path to maintain, in gas flowing in the gas path over the coating, a silicon mass concentration in the range from about 1.8 x 10⁻⁴ parts per million to about 1 part per million.
2. The system of clause 1, wherein the coating has a thickness up to about 250 micrometers.
3. The system of clause 1, wherein the coating has a thickness up to about 50 micrometers.
4. The system of clause 1, wherein the recession-resistant material comprises a silicate.
5. The system of clause 1, wherein the recession-resistant material comprises a rare-earth disilicate.
6. The system of clause 1, wherein the recession-resistant material comprises an alkaline-earth aluminosilicate.
7. The system of clause 1, wherein the alkaline-earth aluminosilicate comprises at least one alkaline-earth element selected from the group consisting of barium and strontium.
8. The system of clause 1, wherein the coating comprises a plurality of layers.
9. The system of clause 8, wherein the plurality of layers comprises a barrier layer comprising the recession-resistant material and an intermediate layer disposed between the barrier layer and the substrate.
10. The system of clause 9, wherein the intermediate layer comprises a rare-earth silicate, an alkaline-earth aluminosilicate, or mullite.
11. The system of clause 8, wherein the plurality of layers comprises a bondcoat disposed on the substrate, the bondcoat comprising silicon.
12. The system of clause 1, wherein the silicon source comprises elemental silicon or a silicon-containing compound.
13. The system of clause 12, wherein the silicon source comprises a solid or a liquid.
14. The system of clause 12, wherein the silicon source comprises a silicon-containing organic compound.
15. The system of clause 14, wherein the silicon-containing organic compound comprises a siloxane.
16. The system of clause 12, wherein the silicon source comprises siloxane, silane, silica, silicone, silicon carbide, silicon nitride, silicon oxide, silicate, or sand.
17. The system of clause 1, wherein the plurality of components includes a combustor disposed to receive an air input and a fuel input, to burn the fuel in a combustion chamber, and to deliver a combustion gas to the gas path, wherein the silicon source is in fluid communication with the air input, the fuel input, the combustion chamber, or the combustion gas.
18. The system of clause 1, wherein the substrate comprises silicon carbide, silicon nitride, or molybdenum silicide.
19. The system of clause 1, wherein the substrate comprises a ceramic matrix composite material, the ceramic matrix composite material comprising silicon carbide.
20. The system of clause 1, wherein the component comprising the coating is a combustion liner, a shroud, a turbine blade, a turbine vane, or a transition piece.
21. The system of clause 1, wherein the gas path is disposed within a gas turbine assembly.
22. A method comprising:
   directing a combustion gas flow within a gas path, the gas path defined by a plurality of components, wherein at least one component comprises a silicon-bearing substrate over which is disposed a coating, the coating comprising a recession-resistant material exposed to the gas path; and
   delivering a silicon-containing material to the gas flow from a silicon source disposed in fluid communication with the gas path to maintain within the gas flow over the coating, a silicon mass concentration in the range from about 1.8 x 10⁻⁴ parts per million to about 1 part per million.
23. The method of clause 22, wherein directing comprises accepting an air input and a fuel input in a combustor and burning the fuel in a combustion chamber of the combustor to produce the combustion gas flow; and wherein delivering comprises injecting the silicon-containing material from the silicon source into the air input, the fuel input, the combustion chamber, or the combustion gas flow.
24. The method of clause 22, wherein the coating has a thickness up to about 250 micrometers.
25. The method of clause 22, wherein the coating has a thickness up to about 50 micrometers.
26. The method of clause 22, wherein the recession-resistant material comprises a silicate.
27. The method of clause 22, wherein the recession-resistant material comprises a rare-earth disilicate or an alkaline-earth aluminosilicate.
28. The method of clause 22, wherein the coating comprises a plurality of layers.
29. The method of clause 28, wherein the plurality of layers comprises a barrier layer comprising the recession-resistant material and an intermediate layer disposed between the barrier layer and the substrate.
30. The method of clause 29, wherein the intermediate layer comprises a rare-earth silicate, an alkaline-earth aluminosilicate, or mullite.
31. The method of clause 22, wherein the silicon source comprises elemental silicon or a silicon-containing compound.
32. The method of clause 22, wherein the silicon source comprises siloxane, silane, silica, silicone, silicon carbide, silicon nitride, silicon oxide, silicate, or sand.
33. The method of clause 22, wherein the substrate comprises silicon carbide, silicon nitride, or molybdenum silicide.
34. The method of clause 22, wherein the substrate comprises a ceramic matrix composite material, the ceramic matrix composite material comprising silicon carbide.
35. The method of clause 22, wherein the component comprising the coating is a combustion liner, a shroud, a turbine blade, a turbine vane, or a transition piece.
36. The method of clause 22, wherein the gas path is disposed within a gas turbine assembly.

## Claims

1. A system (10) comprising:
a plurality of components (20) disposed to define a gas path (30), wherein at least one component (20) comprises a silicon-bearing substrate (40) over which is disposed a coating (50), the coating (50) comprising a recession-resistant material exposed to the gas path (30); and
a silicon source (60) disposed in fluid communication with the gas path (30) and configured to be delivered to the gas path (30) to maintain, in gas flowing in the gas path (30) over the coating (50), a silicon mass concentration in the range from about 1.8 x 10⁻⁴ parts per million to about 1 part per million.

2. The system (10) of claim 1, wherein the coating (50) has a thickness up to about 50 micrometers.

3. The system (10) of claim 1 or claim 2, wherein the recession-resistant material comprises a silicate.

4. The system (10) of claim 1 or claim 2, wherein the recession-resistant material comprises a rare-earth disilicate.

5. The system (10) of claim 1 or claim 2, wherein the recession-resistant material comprises an alkaline-earth aluminosilicate.

6. The system (10) of any preceding claim, wherein the coating (50) comprises a plurality of layers.

7. The system (10) of any preceding claim, wherein the silicon source (60) comprises elemental silicon or a silicon-containing compound.

8. The system (10) of claim 7, wherein the silicon source (60) comprises siloxane, silane, silica, silicone, silicon carbide, silicon nitride, silicon oxide, silicate, or sand.

9. The system (10) of any preceding claim, wherein the plurality of components (20) includes a combustor (400) disposed to receive an air input (410) and a fuel input (420), to burn the fuel in a combustion chamber (430), and to deliver a combustion gas (440) to the gas path (30), wherein the silicon source (60) is in fluid communication with the air input (410), the fuel input (420), the combustion chamber (430), or the combustion gas (440).

10. The system (10) of any preceding claim, wherein the substrate (40) comprises silicon carbide, silicon nitride, or molybdenum silicide.

11. The system (10) of any preceding claim, wherein the component (20) comprising the coating (50) is a combustion liner, a shroud, a turbine blade, a turbine vane, or a transition piece.

12. The system (10) of any preceding claim, wherein the gas path (30) is disposed within a gas turbine assembly.

13. A method comprising:
directing a combustion gas (440) flow within a gas path (30), the gas path (30) defmed by a plurality of components (20), wherein at least one component (20) comprises a silicon-bearing substrate (40) over which is disposed a coating (50), the coating (50) comprising a recession-resistant material exposed to the gas path (30); and
delivering a silicon-containing material to the gas flow from a silicon source (60) disposed in fluid communication with the gas path (30) to maintain within the gas flow over the coating (50), a silicon mass concentration in the range from about 1.8 x 10⁻⁴ parts per million to about 1 part per million.

14. The method of claim 13, wherein directing comprises accepting an air input (410) and a fuel input (420) in a combustor (400) and burning the fuel in a combustion chamber (430) of the combustor (400) to produce the combustion gas (440) flow; and wherein delivering comprises injecting the silicon-containing material from the silicon source (60) into the air input (410), the fuel input (420), the combustion chamber (430), or the combustion gas (440) flow.

15. The method of claim 13 or claim 14, wherein the coating (50) has a thickness up to about 50 micrometers.

16. The method of any one of claims 13 to 15, wherein the recession-resistant material comprises a silicate.

17. The method of any one of claims 13 to 16, wherein the silicon source (60) comprises siloxane, silane, silica, silicone, silicon carbide, silicon nitride, silicon oxide, silicate, or sand.

18. The method of any one of claims 13 to 17, wherein the substrate (40) comprises a ceramic matrix composite material, the ceramic matrix composite material comprising silicon carbide.
